# EUROPEAN PATENT SPECIFICATION

(11) **EP 2 441 159 B1**
(45) Date of publication and mention of the grant of the patent: **27.03.2013**
(21) Application number: 10752177.5
(22) Date of filing: 11.06.2010
(51) Int. Cl.: H02K 33/18, A61C 17/34, B26B 19/28

(54) **Small electrical appliance and electric motor drive unit for a small electrical appliance**
Kleines Elektrogerät und Elektromotoreinheit für ein kleines Elektrogerät
Petit appareil électrique et unité d'entraînement électro-motorisée pour un petit appareil électrique

(30) Priority: 12.06.2009 EP 09007762
(43) Date of publication of application: 18.04.2012
(73) Proprietor: Braun GmbH, 61476 Kronberg/Taunus (DE)
(72) Inventor: ZIEGLER, Frank, 61184 Karben (DE); DOLL, Alexander, 61476 Kronberg (DE); SCHOBER, Uwe, 61479 Glashuetten (DE); KRESSMANN, Frank, 65760 Eschborn (DE)
(74) Representative: Schneider, Stefan Michael
(86) International application number: PCT/IB2010/052621
(87) International publication number: WO 2010/143166

(56) References cited:
- EP-B- 1 922 017
- WO-A-2005/062445
- DE-A1- 10 242 094
- DE-A1-102006 061 381

## Description

The invention relates to a small electrical appliance according to the preamble of claim 1 and to an electric motor drive unit according to the preamble of claim 7 which can be used therein which are both known from EP 1 922 017B1.

Small electrical appliances are known in which a head element carries out simultaneously a rotational movement and a translational vibration movement. Examples are correspondingly designed electric shaving apparatuses and in particular electric toothbrushes.

Such an electric toothbrush is described e.g. in EP 0 850 027 B1. In a handle housing on the known electric toothbrush, there is provided in a housing an electric motor drive unit which transmits on the one hand a rotational movement to a shaft, which can be converted e.g. into a rotating movement of a brush head of the toothbrush. To this end, the rotational movement of an electric motor is transmitted by means of a gear mechanism. A second component of the electric motor drive unit is connected eccentrically to the output of the electric motor and thus brings about a translational vibration movement of a rocker about an axis transverse to the motor axis. This pivoting movement is followed by the rocker and the shaft guided therein, which serves to transmit the rotational vibration movement.

Electric motors are known which can generate a rotational and a linear vibration movement and can be used for example for electric toothbrushes. For example, an electric motor described in WO 2005/062445 has two vibratable motor components and one magnet arrangement comprising a plurality of permanent magnets. A coil is provided for generating a magnetic field. In cooperation with the magnet arrangement, this magnetic field acts to generate a force for inducing a linear vibration movement of one of the vibratable components. The cooperation of the magnetic field generated by the coil and of the magnet arrangement additionally generates a torque for inducing a rotational vibration movement of a second vibratable motor component. With such an arrangement, both a linear and a rotational vibration movement can be generated. without any gear mechanism being necessary.

The object of the present invention is to provide an improved small electrical appliance having a simple and compact structure. The intention is also to provide an advantageous electric motor drive unit and a method for operating the latter, which are suitable for use in such a small electrical appliance.

The object is achieved by a small electrical appliance having the features of Claim and an electric motor drive unit having the features of Claim 7. Dependent claims are directed in each case toward preferred embodiments.

A small electrical appliance according to the invention comprises a head element which carries out a rotational movement and a translational vibration movement. It may be for example the brush head of an electric toothbrush. The small electrical appliance according to the invention comprises a housing with an electric motor drive unit. The latter has a first output for generating a rotational movement relative to the housing, wherein the output comprises at least a first component of the electric motor drive unit. A second output of the electric motor drive unit serves for generating a translational vibration movement relative to the housing and comprises at least a second component of the electric motor drive unit. A shaft is connected to the first component of the electric motor drive unit in order to transmit the rotational movement to the head element, and a rocker is connected to the second component of the electric motor drive unit in order to transmit the translational vibration movement to the head element.

The small electrical appliance according to the invention is characterized in particular in that the first component and the second component are decoupled from one another in such a way that the first component does not follow the vibration movement of the second component. That is to say in particular that the first component of the electric motor unit, which drives the shaft in order to transmit the rotational movement, does not follow the translational vibration movement of the rocker. At least in the region in which the shaft is connected to the first component of the electric motor drive unit, therefore, the shaft does not carry out any vibration movement in the translational direction. It is therefore not necessary, as in the prior art outlined above for example, to configure a gear ratio in such a way that the rotational movement can be transmitted to the shaft even though the point of introduction of the rotational movement from the output of the electric motor drive unit into the shaft also follows the translational movement.

The small electrical appliance according to the invention therefore allows a simple structure and in particular also a small shape.

The decoupling of the first and second component can be achieved for example in an electric motor drive unit in which the first component and the second component comprise permanent magnets which move independently of one another in the field of a correspondingly excited electromagnetic coil, that is to say in particular do not comprise any rigid mechanical connection.

In the small appliance according to the invention, the rocker moves in the translational direction relative both to the housing and also at least to the point of introduction of the rotational movement into the shaft. It is particularly advantageous if a seal is provided between the rocker and the housing, which seal is configured as a buffer in such a way that, during this translational relative movement between the rocker and the housing, a sealed connection between the rocker and the housing is ensured, in order for example to keep moisture away from the interior of the housing.

The rotational movement carried out by the head element of the small electrical appliance may be a continuous rotational movement. Particularly when used for an electric toothbrush, however, a rotational vibration movement is advantageous.

An electric motor drive unit according to the invention can advantageously be used in a small electrical appliance according to the invention, in particular in a small electrical appliance in which a translational vibration movement and a rotational vibration movement are transmitted to the head element. Thus, both the first and the second component of the electric motor drive unit according to the invention are designed to be vibratable. As will be explained below, the electric motor drive unit according to the invention makes it possible that both linear movements and rotational movements can be generated independently of one another and without a complicated additional gear mechanism. Thus, both the first and the second vibratable components are parts of an electric motor which is responsible for generating these linear movements and rotational movements. In the description of the electric motor drive unit according to the invention,

therefore, the first and the second component are also referred to as the first and second motor component.

An electric motor drive unit according to the invention comprises at least one first and at least one second vibratable motor component, which are at least partially made of metal, and a coil for generating a magnetic field. A first magnet arrangement comprises at least one first permanent magnet which, in cooperation with a magnetic field generated by the coil, generates a force for inducing a rotational vibration of the at least one first vibratable motor component. A second magnet arrangement is provided which comprises at least one second permanent magnet which, in cooperation with a magnetic field generated by the coil, generates a force for inducing a linear vibration movement of the at least one second motor component. The electric motor drive unit according to the invention is characterized in particular in that at least one flux conducting element is provided which conducts magnetic flux generated by the coil to interact with the at least one second permanent magnet. The flux conducting element in this case comprises for example a suitably shaped metal body.

The electric motor drive unit according to the invention can generate both linear movements and rotational movements independently of one another and without a complicated additional gear mechanism. The flux conducting element according to the invention in this case makes it possible in a simple manner to use the magnetic field generated by the coil not only for inducing the rotational vibration movement but rather also for inducing the linear vibration movement by conducting the magnetic flux out of the coil. With the flux conducting element according to the invention, it is possible that the rotational movement and the linear movement are independent of one another.

One simple embodiment provides that the flux conducting element comprises a metal yoke which passes through the coil windings of the coil which generates the magnetic Held. In this case, it is advantageously provided that the flux conducting element is U-shaped, wherein the base of the U-shape passes through the coil windings (the yoke is therefore arranged inside the coil), while the legs of the U-shape extend symmetrically away from the base in order to make magnetic flux available outside the coil windings (the legs therefore end outside the coil).

It may for example be provided that the flux conducting element does not move relative to the first magnet arrangement. A particularly compact structure can be achieved if the first motor component does not follow the movement of the second motor component but the flux conducting element nevertheless follows the rotational movement of the first vibratable component.

In the electric motor drive unit according to the invention, a coil is used to induce different vibrations. If the vibratable component which carries out the rotational vibration movement and the vibratable component which carries out the linear vibration movement have different resonant frequencies, the two vibrations can be induced independently of one another. Depending on the frequency supplied, therefore, an isolated linear vibration movement or an isolated rotational vibration movement can be generated.

One particularly cost-effective and structurally simple embodiment provides that the at least one first vibratable motor component and the first magnet arrangement are configured in such a way that a reluctance torque which acts after the coil current has been switched off and which causes an angular movement acts as a return torque for the first vibratable motor component. With the coil current switched on, the coil induces a magnetic flux in the first vibratable motor component, which orients itself in accordance with the magnetic field generated by the first magnet arrangement in order to minimize energy. If, after this orienting movement, the current through the coil is switched off, the magnetic field lines of the first magnet arrangement across the first vibratable component can be short-circuited. As a result, the first vibratable component experiences a return torque (reluctance torque) which returns the first vibratable motor component to its starting position. In such a system, no complicated additional return springs are necessary.

It may likewise be provided that the at least one flux conducting element and the second magnet arrangement are configured in such a way that a reluctance torque which acts after the coil current has been switched off and which causes a linear movement provides at least partially the return torque for the second vibratable motor component.

As described above, in order to couple out the rotational movement, a shaft is provided which is connected to the first component of the electric motor drive unit and in the arrangement according to the invention is collinear with the axis of rotation of the first component. The linear vibration movement is transmitted to a rocker which comprises a mount that can be plugged onto e.g. the brush head of an electric toothbrush. Within the brush head, the shaft which transmits the rotational movement is connected for example to a corresponding holder which transmits the rotational movement to a brush mount, e.g. by means of suitably arranged toothed wheels which mesh with one another. Since in the small electrical appliance according to the invention - as described - the point of introduction of the rotational movement into the shaft does not follow the translational movement, the shaft must for this purpose be configured in a sufficiently flexible manner or must be provided with sufficient play in the holder of the brush head. Alternatively, the shaft may also have an articulation which divides the shaft into two sections, the rotational movement being transmitted to a first section. The rotational movement is transmitted via the articulation to the second section of the shaft, which is connected to the rocker. The articulation ensures that the shaft has sufficient flexibility.

In one particularly simple embodiment of the articulation, the shaft is tapered in the articulation region and is thus locally weakened in the lateral direction.

According to one aspect of the invention, an electric motor drive unit for a small electrical appliance comprises at least one first and at least one second vibratable component, a coil for generating a magnetic field, a first magnet arrangement which comprises at least one first permanent magnet which, in cooperation with a magnetic field generated by the coil, generates a force for inducing a rotational vibration of the at least one first vibratable component, a second magnet arrangement which comprises at least one second permanent magnet which, in cooperation with a magnetic field generated by the coil, generates a force for inducing a linear vibration movement of the at least one second vibratable component, wherein the first component and the second component are decoupled in such a way that the first component does not follow the vibration movement of the second component (28).

The electric motor drive unit according to the invention and the respective preferred embodiments thereof can be used with particular advantage in a small electrical appliance according to the invention in which a rotational vibration movement and a translational vibration movement are required.

The invention will be explained in detail with reference to the appended schematic figures which show, by way of example, embodiments according to the invention based on the example of an electric toothbrush. In the figures
- Fig. 1: shows a highly schematic diagram of part of an electric toothbrush configured according to the invention in three different operating states,
- Fig. 2: shows a highly schematic diagram of part of an electric toothbrush of the prior art,
- Fig. 3: shows a perspective view of the magnet system of one embodiment of an electric motor drive unit according to the invention,
- Fig. 4: shows the cross-section through the rotation unit of the electric motor drive unit of Fig. 3,
- Fig. 5: shows a perspective detail view of the electric motor drive unit of Fig. 3.
- Fig. 6: shows the curve of the reluctance torque as a function of the movement angle of the rotor for embodiments according to the invention of the electric motor drive unit with different rotor opening angles,
- Fig. 7: shows a schematic diagram of the drive of one embodiment of an electric toothbrush with an electric motor drive unit according to the invention, in a sectional view from the side,
- Fig. 8: shows a schematic diagram of the drive of another embodiment of an electric toothbrush with an electric motor drive unit according to the invention, in a sectional view from the side, and
- Fig. 9: shows one possible embodiment of a shaft of the electric motor drive unit according to the invention which is used in the electric toothbrush of Fig. 8.

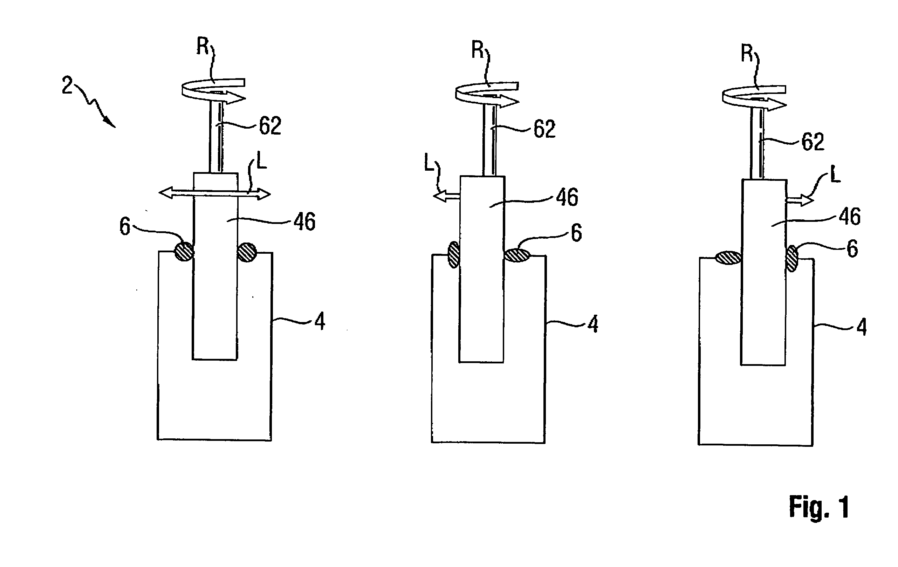

Fig. 1 shows the main part of an electric toothbrush 2 in a schematic diagram in three different operating states.

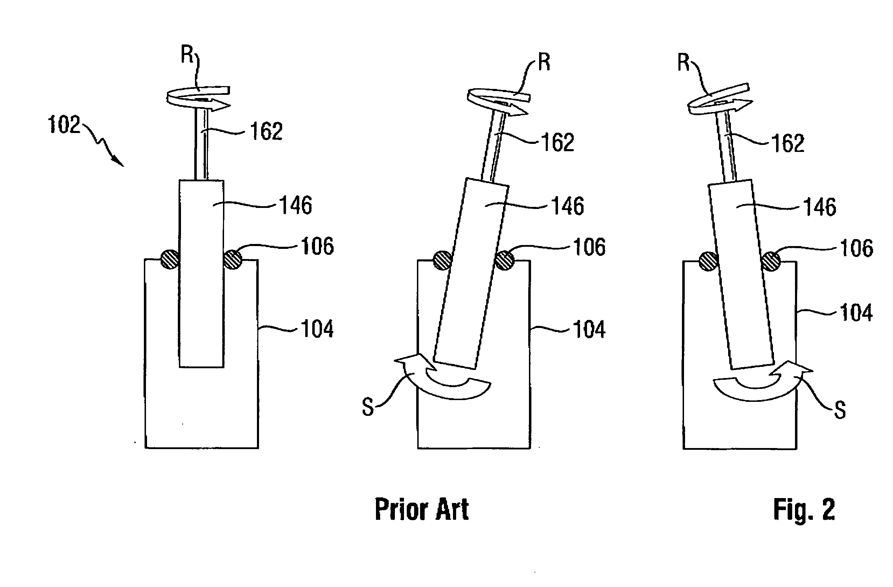

However, for the sake of better understanding, reference will first be made to Fig. 2 which likewise shows in a schematic diagram comparable parts of an electric toothbrush 102 of the prior art, as implemented for example also in EP 0 850 027 B1.

A housing 104, which also serves as the handle for the electric toothbrush 102, contains an electric motor (not shown explicitly here), by means of which a rotational movement R, generally a rotational vibration movement, is transmitted to a shaft 162. A rocker 146 is tiltably mounted in the housing 104 via a seal 106. The seal 106 serves for example to keep water away from the interior of the housing.

As can be seen in particular in the two right-hand diagrams of Fig. 2, the rocker 146 carries out a pivoting movement S about an axis which is transverse to the axis of the rotational vibration movement R. It is obvious that either the entire electric motor drive unit which is responsible for the rotational vibration movement R, or at least significant parts, in particular the point of introduction of the rotational movement into the shaft 162, follow the pivoting movement S so that the rotational vibration movement R can be transmitted to the shaft 162 which likewise follows the pivoting movement.

The housing of a toothbrush head is plugged onto the rocker 146 so that the pivoting movement S is transmitted directly to the brush head and can be used for example to provide a poking movement in order to remove plaque. At the same time, the shaft 162 engages in a holder within the brush head, which can transmit the rotational vibration movement R to a brush head in order to allow cleaning of the teeth.

In an electric toothbrush 2 according to one embodiment of the invention, as shown in Fig. 1, the rocker 46 does not carry out a pivoting movement but rather a translational vibration movement L. While the central position is shown in the left-hand diagram of Fig. 1, the two right-hand diagrams of Fig. 1 show the rocker 46 in its two maximum excursions in the different lateral directions. The shaft 62 carries out a rotational vibration movement R. Both vibration movements R and L are generated by an electric motor drive unit within the housing 4, said electric motor drive unit not being shown here. So that the rocker 46 can carry out the translational vibration movement L, the seal 6 is configured as a buffer which has enough flexibility that sealing with respect to the housing 4 can be ensured even during the translational vibration movement L of the rocker 46.

The electric motor drive unit (not shown here) in the housing comprises at least two motor components, one of which is responsible for the rotational vibration movement R and can transmit a corresponding movement to the shaft 62, and another of which is responsible for the translational vibration movement L. However, as shown in Fig. 1, the shaft 62, at least in the region close to the housing 4, does not perform the translational vibration movement L. At least that motor component which is responsible for generating the rotational vibration movement R can accordingly be mounted in a manner fixed to the housing and need not follow the translational vibration L. As a result, a much more compact shape and quieter operation are possible.

The brush head of the toothbrush is plugged onto the rocker 46 so that it follows the translational vibration movement L of the latter. This can be used for example to generate a poking movement in order to remove plaque from the teeth. At the same time, the shaft 62 engages in a holder provided in a manner known per se within the toothbrush head and transmits the rotational movement, for example in order to generate a rotational vibration movement of the brush head. In a manner which will be described below, the shaft is to this end either provided with sufficient play or is sufficiently flexible to compensate the vibration movement L.

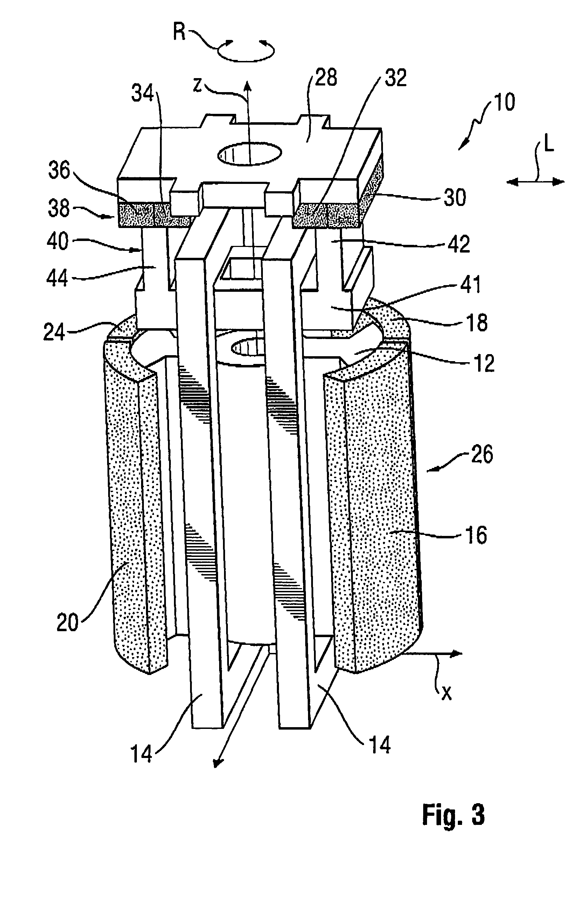

With reference to Figs. 3 to 6, an electric motor drive unit 10 will be described which is suitable for providing the rotational vibration movement R and the translational vibration movement L in one embodiment of an electric toothbrush 2 according to the invention, as shown in Fig. 1. However, the concept of the small electrical appliance according to the invention, in which the two components of the electric motor drive unit are configured in such a way that the component for generating the rotational vibration movement does not follow the translational vibration movement, is not limited to the use of the particular embodiment of one possible electric motor drive unit which is described below.

Fig. 3 shows the motor unit of an electric motor drive unit 10 according to the invention. It comprises a rotor 12 as the first vibratable component made from suitable magnetizable metal material, for example iron. The rotor 12 is arranged within the coil 14, which here consists of two elements and in the illustrated arrangement generates a magnetic field in the X direction when current flows through it. The rotor 12 is mounted such as to be able to rotate about the Z axis, so that, when the coil is switched on, it is magnetized by the magnetic field generated by the latter. The permanent magnets 16, 18, 20, 24 form a first magnet arrangement 26, in the field of which the rotor 12 orients itself in order to minimize energy.

The permanent magnets 16 and 18 are in this case arranged with opposing poles in the radial direction. For example, in the case of the permanent magnet 16, the south pole is arranged radially inward and the north pole is arranged radially outward. In the case of the permanent magnet 18, the north pole is arranged radially inward and the south pole is arranged radially outward. In the illustrated arrangement of Fig. 3, the arrangement, of north pole and south pole in the case of the permanent magnet 20 corresponds to the pole arrangement of the permanent magnet 16 and the arrangement of the poles of the permanent magnet 24 corresponds to the pole arrangement of the permanent magnet 18.

Also located within the coil winding of the coil 14 is a U-shaped flux conducting element 40 made from metal, for example made from iron, having a base 41 and two flux conducting legs 42, 44. When the coil current is switched on, a magnetic flux is induced therein, said flux being picked up by a second magnet arrangement, 38 which comprises two permanent magnets, wherein for example the segments 30 and 36 are south poles and the elements 32 and 34 are north poles. The magnet arrangement 38 is fixedly connected to the second vibratable motor component, which is configured as an armature 28. In the illustrated embodiment, the U-shaped flux conducting element 40 has a base 41 (also referred to as the yoke), which extends through the interior of the split coil 14, and two flux conducting legs 42, 44, which extend outside the coil 14, so that the magnetic flux can be made available by the flux conducting element 40 outside the coil 14 at the ends of the flux conducting legs 42, 44. The armature 28 and the magnet arrangement 38 attached thereto can thus be arranged outside the coil 14, as a result of which a decoupling of the two desired movements is achieved in a simple manner.

Inducing a magnetic flux in the flux conducting element 40 gives rise to an energy-minimizing movement of the magnets of the second magnet arrangement 38, as a result of which the armature 28 is moved in the X direction, that is to say in the radial direction relative to the axis of rotation of the rotor 12.

The rotor 12, the flux conducting element 40 and the armature 28 in each case have a central bore, through which a shaft is guided in a manner which will be described below, said shaft being moved by the rotor 12 to carry out the rotational movement. At least the central bore of the armature 28 is in this case dimensioned to be large enough that a shaft connected to the rotor 12 does not follow the linear vibration movement L of the armature 28.

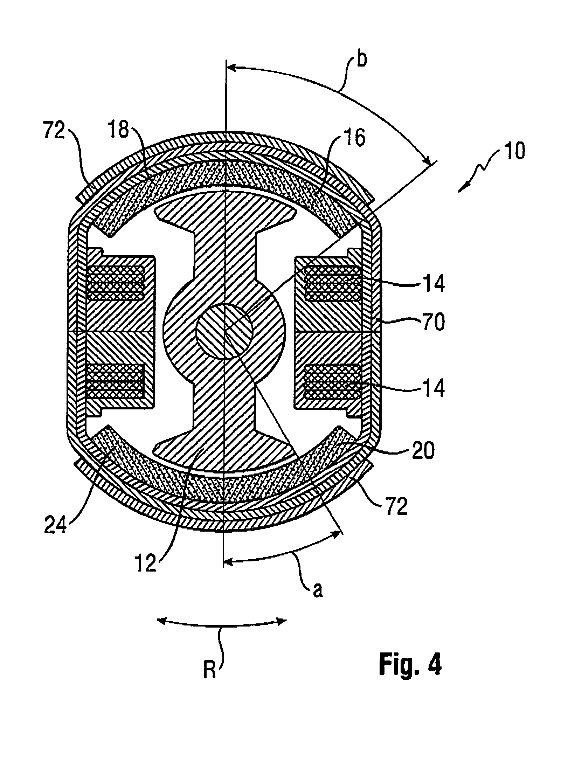

Fig. 4 shows a cross-section through the electric motor of Fig. 3 in a plane which is horizontal in Fig. 3.

The indicated rotor opening angle a is an indication of the circumferential size of the rotor 12. The angle formed by a magnet segment 16, 18, 20 or 24 is denoted b.

In Fig. 4, it is possible to see in the cross-section also the housing 70, which is this case is of two-layer design, together with a housing reinforcement 72 which is provided in the region of the permanent magnets 16, 18, 20, 24. The housing 70 and the housing reinforcement 72 are made from magnetic steel sheet, for example having a magnetic flux density of 1.7 Tesla. The housing 70 with the housing reinforcement 72 allows, in particular in the region of the permanent magnets 16, 18, 20, 24, the magnetic return for the magnetic flux.

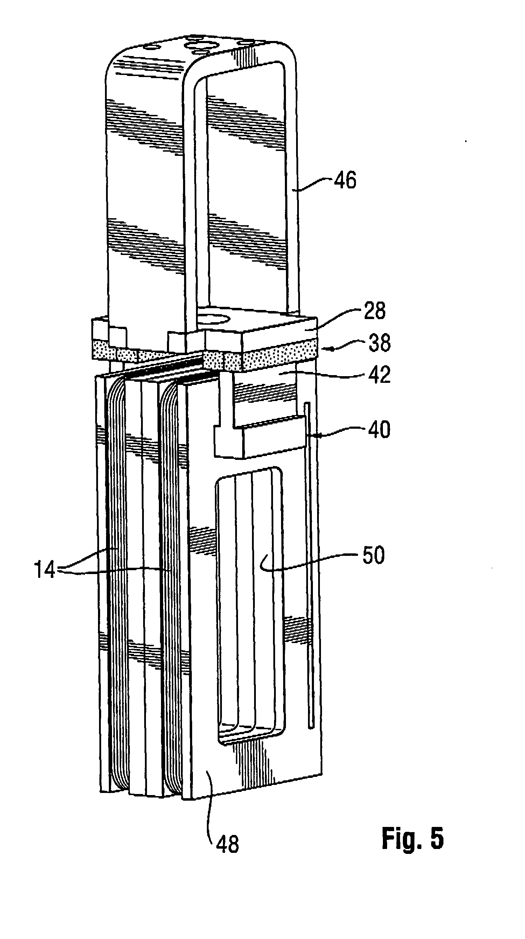

Fig. 5 shows a perspective view of the system which can be seen in Fig. 3, without the rotor 12 and the armature 28. The coil windings 40 are carried by a coil carrier 48. A rocker 46 is fixedly connected to the armature 28. The rotor 12 (not shown in Fig. 5) extends through the coil opening 50.

The geometries of the magnet arrangement 26 and of the rotor 12 are selected in such a way that a reluctance torque is produced which can act as a return torque for the rotational movement of the rotor 12. When the coil current is switched on, a magnetic field is induced in the rotor 12, which magnetic field orients itself in the magnetic field of the first magnet arrangement 26 and thus leads to a rotational movement of the rotor 12. If the coil current is switched off, the magnetic field lines of the permanent magnets 16, 18, 20 and 24 across the metal rotor 12 can be short-circuited and thus can generate a reluctance torque in a manner known per se. Given a suitable choice in particular of the rotor opening angle a and of the magnet segment angle b, a resulting reluctance torque can be set which is essentially linearly dependent on the movement angle of the rotor 12 about the axis of rotation z.

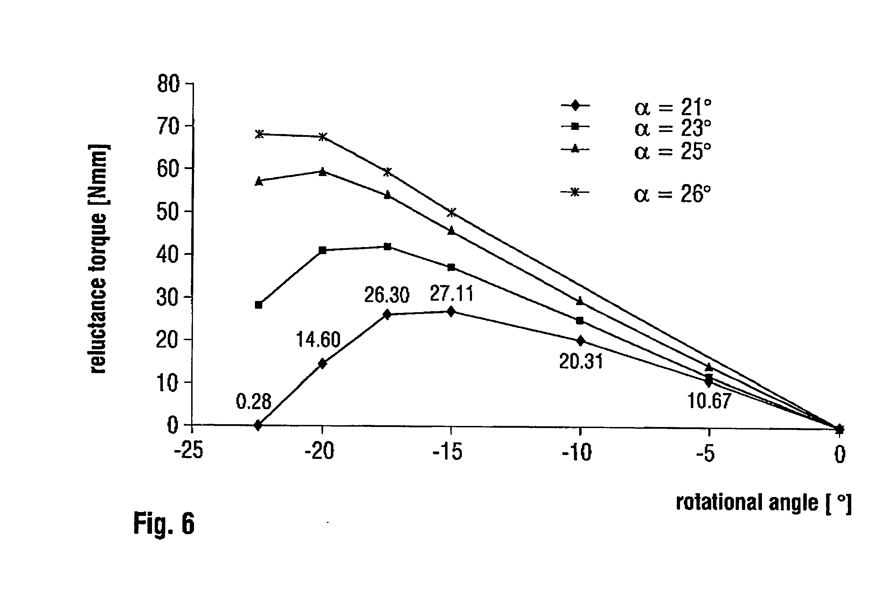

Fig. 6 shows corresponding simulation results for different rotor opening angles a in the case of a fixed magnet segment angle b. In the simulation shown, the reluctance torque in the illustrated example of a rotor opening angle a = 26° advantageously proves to be linearly dependent on the movement angle of the rotor 12 up to a movement of 20°.

With a suitable design, there is thus no need for mechanical return springs for bringing the rotor back into its starting position. In this case, the vibratable component of the rotor 12 has a specific resonant frequency f_{R}. If further mechanical spring units are additionally provided, the resonant frequency changes accordingly.

Similarly, the reluctance torque of the second vibratable system, which comprises at least the armature 28 together with the second magnet arrangement 38, can be used to provide at least part of the necessary return force for the linearly moved armature 28.

In particular, with the coil current switched on, a magnetic field is induced in the flux conducting element 40, said magnetic field being guided via the flux conducting legs 42, 44 to the second magnet arrangement 38. The armature 28 is moved in the X direction in order to minimize the energy of the system. If the coil current is now switched off, the magnetic field lines of the poles of the magnets of the magnet arrangement 38 across the ends of the flux conducting legs 42, 44 can be short-circuited and thus lead to a reluctance torque which moves the armature 28 back in the X direction. The armature 28 has, together with the second magnet arrangement 38, a specific resonant frequency f_{L}. If, alternatively or additionally, mechanical spring elements are used to bring the armature 28 back into its original position after the movement, the resonant frequency changes accordingly.

The described embodiments of the electric motor drive unit according to the invention are used as follows when used in an electric toothbrush.

An alternating current is applied to the coil 14. Its frequency is adapted to the desired effect. If the frequency corresponds for example to the resonant frequency f_{R} of the rotational oscillation movement of the rotor 12, then mainly this movement is induced. If, on the other hand, the frequency applied to the coil corresponds to the resonant frequency f_{L} of the linearly oscillating armature 28, then mainly the linear vibration movement thereof is induced. Superposed movements can be achieved for example by superposing different frequency components. With the system, therefore, the individual movement modes can be induced essentially independently of one another. Depending on the intensity of the supplied current at the respective frequency, the movement amplitude of the respective vibration movement can also be adjusted.

The vibration movements of the armature 28 and of the shaft 62 are transmitted in the described manner to the brush head of the electric toothbrush.

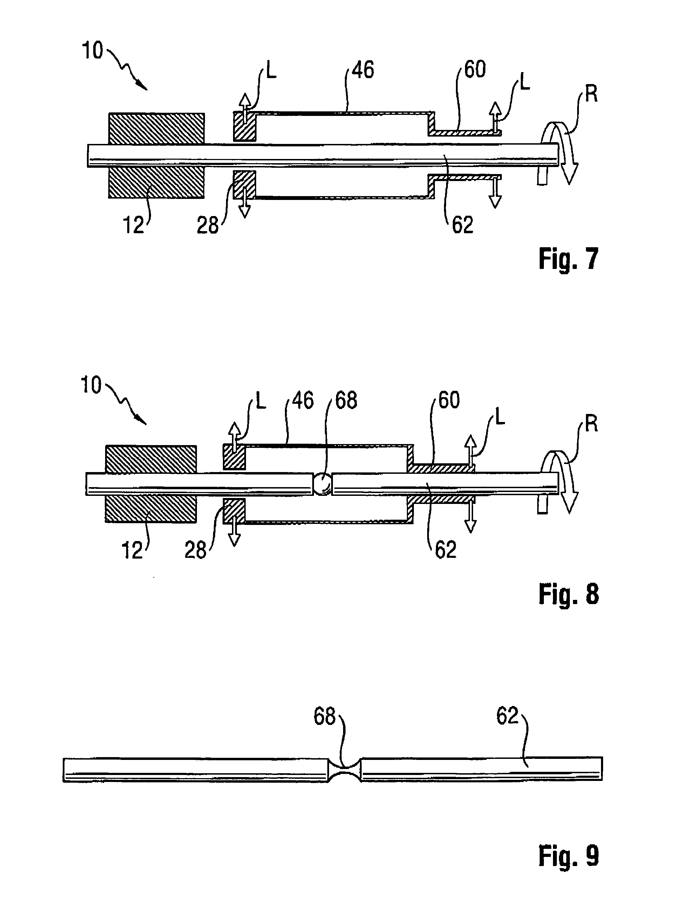

Fig. 7 shows in cross-section a schematic arrangement for use on an electric toothbrush. Fixed in the rotor 12 is a shaft 62 which follows the rotational movement of the rotor 12 and thus moves in rotation in the direction of rotation R. The armature 28 moves radially relative to this arrangement in the direction of the arrows L. Via the rocker 46, this movement is transferred into the mount 60 for the brush head of an electric toothbrush. In a manner not shown, the brush head of the electric toothbrush is connected to the mount 60 and to the shaft 62 in order to follow the rotational movement R and/or the radial linear movement L. In this case, the shaft 62 must be sufficiently flexible or must be mounted in the brush head with sufficient play in order to be able to compensate the translational vibration movement L which is transmitted from the mount 60 to the brush head.

Fig. 8 shows a modified embodiment, in which the mount 60 is connected to the shaft 62 which in this embodiment comprises an articulation 68, so that the linear movement L is transmitted to the right-hand part of the shaft 62 in Fig. 8. The brush head (not shown) of an electric toothbrush is connected to the right-hand part of the shaft 62, which then carries out the linear vibration movement L and the rotational vibration movement R and transmits it to the brush head. Also implemented in this embodiment is the concept according to the invention that the motor component which is responsible for providing the rotational movement (here the rotor 12) does not follow the vibration movement of the motor component which is responsible for providing the translational vibration movement L (here the armature 28). In particular, the translational vibration movement L is not transmitted to the shaft 62 even at the location where the shaft 62 is connected to the rotor 12.

Fig. 9 shows one possible embodiment of a shaft made from plastic for example, with an articulation which is formed here simply by a tapered region 68 which is therefore more flexible than the surrounding region of the shaft 62.

### List of references

- 2: electric toothbrush
- 4: housing
- 6: buffer
- 10: electric motor drive unit
- 12: rotor
- 14: coil
- 16, 18, 20. 24: permanent magnet
- 26: first magnet arrangement,
- 28: armature
- 30, 32, 34, 36: magnet segments
- 38: second magnet arrangement
- 40: flux conducting element
- 41: base of the flux conducting element
- 42, 44: flux conducting legs
- 46: rocker
- 48: coil carrier
- 50: coil opening
- 60: brush mount
- 62: shaft
- 68: articulation
- 70: housing
- 72: housing reinforcement
- 102: electric toothbrush
- 104: housing
- 106: seal
- 146: rocker
- 162: shaft
- R: rotational vibration movement
- L: linear vibration movement
- S: pivoting movement
- a: rotor opening angle
- b: magnet segment angle

## Claims

1. A small electrical appliance, comprising
- a head element which carries out a rotational movement (R) and a translational vibration movement (L),
- a housing (4),
- an electric motor drive unit (10) in the housing (4), with a first output for generating a rotational movement (R) relative to the housing (4), which comprises at least a first component (12) of the electric motor drive unit (10), and a second output for generating a translational vibration movement (L) relative to the housing (4), which comprises at least a second component (28) of the electric motor drive unit (10),
- a shaft (62) which is connected to the first component (12) of the electric motor drive unit (10) in order to transmit the rotational movement to the head element,
- a rocker (46) which is connected to the second component (28) of the electric motor drive unit (10) in order to transmit the translational vibration movement (L) to the head element,
**characterized in that** the first component (12) and the second component (28) are decoupled in such a way that the first component (12) does not follow the vibration movement (L) of the second component (28).

2. The small electrical appliance according to Claim 1, **characterized in that** the first component (12) and the second component (28) have no rigid mechanical connection.

3. The small electrical appliance according to any of Claims 1 or 2, **characterized in that** the first component (12) and the second component (28) comprise permanent magnets which can move independently of one another in the field of an electromagnetic coil (14).

4. The small electrical appliance according to any of Claims 1 to 3, **characterized by** a buffer (6) between the housing (4) and the rocker (46).

5. The small electrical appliance according to any of Claims 1 to 4, **characterized in that** the rotational movement (R) is a rotational vibration movement.

6. The small electrical appliance according to any of Claims 1 to 5, **characterized in that** it is designed as an electric toothbrush (2) and the at least one head element comprises a brush head.

7. An electric motor drive unit (10) for a small electrical appliance, comprising
- at least one first and at least one second vibratable component (12, 28),
- a coil (14) for generating a magnetic field,
- a first magnet arrangement (26) which comprises at least one first permanent magnet (16, 18, 20, 24) which, in cooperation with a magnetic field generated by the coil (14), generates a force for inducing a rotational vibration (R) of the at least one first vibratable component (12),
- a second magnet arrangement (38) which comprises at least one second permanent magnet (30, 32, 34, 36) which, in cooperation with a magnetic field generated by the coil (14), generates a force for inducing a linear vibration movement (L) of the at least one second vibratable component (28),
**characterized in that**
the first component (12) and the second component (28) are decoupled in such a way that the first component (12) does not follow the vibration movement (L) of the second component (28).

## Patentansprüche

1. Elektrokleingerät, umfassend
- ein Kopfstück, das eine Rotationsbewegung (R) und eine Translationsschwingungsbewegung (L) ausführt,
- ein Gehäuse (4),
- eine elektromotorische Antriebseinheit (10) in dem Gehäuse (4) mit einer ersten Ausgabe zum Erzeugen einer Rotationsbewegung (R) in Bezug auf das Gehäuse (4), umfassend mindestens eine erste Komponente (12) der elektromotorischen Antriebseinheit (10), und einer zweiten Ausgabe zum Erzeugen einer Translationsschwingungsbewegung (L) in Bezug auf das Gehäuse (4), umfassend mindestens eine zweite Komponente (28) der elektromotorischen Antriebseinheit (10),
- eine Welle (62), die mit der ersten Komponente (12) der elektromotorischen Antriebseinheit (10) verbunden ist, um die Rotationsbewegung auf das Kopfstück zu übertragen,
- eine Schwinge (46), die mit der zweiten Komponente (28) der elektromotorischen Antriebseinheit (10) verbunden ist, um die Translationsschwingungsbewegung (L) auf das Kopfstück zu übertragen,
**dadurch gekennzeichnet, dass** die erste Komponente (12) und die zweite Komponente (28) derart entkoppelt sind, dass die erste Komponente (12) der Schwingungsbewegung (L) der zweiten Komponente (28) nicht folgt.

2. Elektrokleingerät nach Anspruch 1, **dadurch gekennzeichnet, dass** die erste Komponente (12) und die zweite Komponente (28) keine steife mechanische Verbindung aufweisen.

3. Elektrokleingerät nach einem der Ansprüche 1 oder 2, **dadurch gekennzeichnet, dass** die erste Komponente (12) und die zweite Komponente (28) Permanentmagnete aufweisen, die sich in dem Feld einer elektromagnetischen Spule (14) unabhängig voneinander bewegen können.

4. Elektrokleingerät nach einem der Ansprüche 1 bis 3, **gekennzeichnet durch** einen Puf fer (6) zwischen dem Gehäuse (4) und der Schwinge (46).

5. Elektrokleingerät nach einem der Ansprüche 1 bis 4, **dadurch gekennzeichnet, dass** die Rotationsbewegung (R) eine Rotationsschwingungsbewegung ist.

6. Elektrokleingerät nach einem der Ansprüche 1 bis 5, **dadurch gekennzeichnet, dass** es als eine elektrische Zahnbürste (2) konzipiert ist und das mindestens eine Kopfstück einen Bürstenkopf umfasst.

7. Elektromotorische Antriebseinheit (10) für ein Elektrokleingerät, umfassend
- mindestens eine erste und mindestens eine zweite schwingungsfähige Komponente (12, 28),
- eine Spule (14) zum Erzeugen eines Magnetfeldes,
- eine erste Magnetanordnung (26), die mindestens einen ersten Permanentmagneten (16, 18, 20, 24) umfasst, der mit einem von der Spule (14) erzeugten Magnetfeld zusammenwirkend eine Kraft erzeugt, um eine Rotationsschwingungsbewegung (R) der mindestens einen ersten schwingungsfähigen Komponente (12) herbeizuführen,
- eine zweite Magnetanordnung (38), die mindestens einen zweiten Permanentmagneten (30, 32, 34, 36) umfasst, der mit einem von der Spule (14) erzeugten Magnetfeld zusammenwirkend eine Kraft erzeugt, um eine lineare Schwingungsbewegung (L) der mindestens einen zweiten schwingungsfähigen Komponente (28) herbeizuführen,
**dadurch gekennzeichnet dass**
die erste Komponente (12) und die zweite Komponente (28) derart entkoppelt sind, dass die erste Komponente (12) der Schwingungsbewegung (L) der zweiten Komponente (28) nicht folgt.

## Revendications

1. Petit appareil électrique, comprenant
- un élément de tête qui effectue un mouvement de rotation (R) et un mouvement de vibration par translation (L),
- un logement (4),
- un dispositif d'entraînement à moteur électrique (10) dans le logement (4), avec une première sortie pour générer un mouvement de rotation (R) par rapport au logement (4), laquelle comprend au moins un premier composant (12) du dispositif d'entraînement à moteur électrique (10), et une deuxième sortie pour générer un mouvement de vibration par translation (L) par rapport au logement (4), laquelle comprend au moins un deuxième composant (28) du dispositif d'entraînement à moteur électrique (10),
- un arbre (62) qui est attaché au premier composant (12) du dispositif d'entraînement à moteur électrique (10) afin de transmettre le mouvement de rotation à l'élément de tête,
- un culbuteur (46) qui est attaché au deuxième composant (28) du dispositif d'entraînement à moteur électrique (10) afin de transmettre le mouvement de vibration par translation (L) à l'élément de tête,
**caractérisé en ce que** le premier composant (12) et le deuxième composant (28) sont désaccouplés d'une manière telle que le premier composant (12) ne suit pas le mouvement de vibration (L) du deuxième composant (28).

2. Petit appareil électrique selon la revendication 1, **caractérisé en ce que** le premier composant (12) et le deuxième composant (28) n'ont aucune liaison mécanique rigide.

3. Petit appareil électrique selon l'une quelconque des revendications 1 ou 2, **caractérisé en ce que** le premier composant (12) et le deuxième composant (28) comprennent des aimants permanents qui peuvent se déplacer indépendamment l'un de l'autre dans le champ d'une bobine électromagnétique (14).

4. Petit appareil électrique selon l'une quelconque des revendications 1 à 3, **caractérisé par** un tampon (6) entre le logement (4) et le culbuteur (46).

5. Petit appareil électrique selon l'une quelconque des revendications 1 à 4, **caractérisé en ce que** le mouvement de rotation (R) est un mouvement de vibration par rotation.

6. Petit appareil électrique selon l'une quelconque des revendications 1 à 5, **caractérisé en ce qu'**il est conçu en tant que brosse à dents électrique (2) et l'au moins un élément de tête comprend une tête de brosse.

7. Dispositif d'entraînement à moteur électrique (10) pour un petit appareil électrique, comprenant
- au moins un premier et au moins un deuxième composant pouvant vibrer (12, 28),
- une bobine (14) pour générer un champ magnétique,
- un premier ordonnancement d'aimant (26) qui comprend au moins un premier aimant permanent (16, 18, 20, 24) qui, en coopération avec un champ magnétique généré par la bobine (14), génère une force permettant d'induire une vibration par rotation (R) de l'au moins un premier composant pouvant vibrer (12),
- un deuxième ordonnancement d'aimant (38) qui comprend au moins un deuxième aimant permanent (30, 32, 34, 36) qui, en coopération avec un champ magnétique généré par la bobine (14), génère une force permettant d'induire un mouvement de vibration linéaire (L) de l'au moins un deuxième composant pouvant vibrer (28),
**caractérisé en ce que**
le premier composant (12) et le deuxième composant (28) sont désaccouplés d'une manière telle que le premier composant (12) ne suit pas le mouvement de vibration (L) du deuxième composant (28).
